(19) Europäisches Patentamt
European Patent Office
Office européen des brevets

(11) **EP 1 300 322 A1**

(12) **DEMANDE DE BREVET EUROPEEN**

(43) Date de publication:
**09.04.2003 Bulletin 2003/15**

(51) Int Cl.7: **B62D 25/08**, B62D 29/04, B29C 45/17

(21) Numéro de dépôt: 02292442.7

(22) Date de dépôt: **03.10.2002**

(84) Etats contractants désignés:
**AT BE BG CH CY CZ DE DK EE ES FI FR GB GR IE IT LI LU MC NL PT SE SK TR**
Etats d'extension désignés:
**AL LT LV MK RO SI**

(30) Priorité: **04.10.2001 FR 0112795**

(71) Demandeur: **COMPAGNIE PLASTIC OMNIUM**
**69007 Lyon (FR)**

(72) Inventeurs:
• **Carrier, Pascal**
**01100 Oyonnax (FR)**

• **Cheron, Hugues**
**01800 Bourg Saint Christophe (FR)**
• **Gille, Denis**
**01100 Bellignat (FR)**
• **Andre, Gérald**
**01100 Oyonnax (FR)**

(74) Mandataire: **Remy, Vincent Noel Paul et al**
**Cabinet Lhermet La Bigne & Remy,**
**191 rue Saint-Honoré**
**75001 Paris (FR)**

(54) **Face avant technique de véhicule automobile renforcée par au moins une pièce creuse, procédé pour réaliser une telle face avant technique et procédé pour conférer une faible inertance à une face avant technique**

(57) L'invention concerne une face avant technique en matière plastique de véhicule automobile, pourvue de renforts locaux en matière plastique.

L'un au moins desdits renforts locaux est constitué par une enveloppe fermée délimitant une cavité intérieure creuse.

Fig. 1

EP 1 300 322 A1

**Description**

La présente invention concerne une face avant technique renforcée par au moins une pièce creuse, un procédé pour réaliser une telle face avant technique et un procédé pour conférer une faible inertance à une face avant technique.

Une face avant technique est une pièce de structure située à l'avant d'un véhicule automobile, portant différents organes appartenant au compartiment moteur et des pièces de carrosserie telles que les ailes, le bouclier avant, la calandre, le bas de caisse ou spoiler ou le capot moteur.

Fréquemment, bien que cela ne soit pas le cas général, la face avant technique supporte le radiateur, qui est un organe relativement lourd, ainsi que l'attache de capot.

De ce fait, la face avant technique doit comporter des renforts locaux destinés à garantir sa bonne tenue mécanique dans ses régions fortement sollicitées.

Les renforts traditionnellement utilisés sont des inserts métalliques qui peuvent être surmoulés lors de la réalisation de la face avant technique ou rapportés sur celle-ci et solidarisés avec elle par tout moyen approprié.

Une autre méthode connue de renforcement local de la face avant technique consiste à utiliser un matériau renforcé dans ses régions fortement sollicitées.

En dehors de ces régions à forte sollicitation mécanique, il existe aussi dans la face avant technique des zones devant présenter une bonne stabilité dimensionnelle en vue de la mise en référence de la face avant technique avec des pièces environnantes, notamment avec des organes rapportés, comme par exemple des blocs optiques.

Généralement, la tenue dimensionnelle de la face avant technique dans la région des optiques est assurée par l'incorporation de nervures autour des logements recevant les boîtiers optiques.

Les nervures entourant les logements assurent en outre la protection desdits boîtiers en préservant ceux-ci des contraintes résultant d'une déformation de la face avant technique en raison de dilatations thermiques ou de chocs contre des obstacles.

Mais comme toutes autres pièces du véhicule, les faces avant techniques doivent respecter un cahier des charges qui porte non seulement sur leur tenue aux chocs ou aux déformations mais également sur leur comportement vibratoire.

Pour qualifier le comportement vibratoire d'une face avant technique, on la soumet au test suivant.

La pièce est mise en vibration par ses points de fixation à une fréquence variant de 0 à 400 Hz selon un mouvement d'oscillation qui peut être multidirectionnel et l'on mesure l'accélération de la pièce en un point critique de celle-ci.

On en tire une grandeur calculée, appelée inertance, qui caractérise le comportement vibratoire de la pièce pour toute la gamme de fréquence étudiée. Plus l'inertance est faible, moins la pièce est susceptible de se déformer lorsqu'elle subit une force oscillant à une fréquence donnée.

Dans une face avant technique soumise à des conditions de vibrations habituelles, les zones renforcées par des inserts métalliques ou par des matières de renfort présentent un comportement satisfaisant.

En revanche, les zones pourvues de nervures présentent l'inconvénient que les nervures sont orientées et ne sont pas efficaces dans toutes les directions de sollicitation. Ainsi, les nervures peuvent plus facilement accepter des déformations à certaines fréquences et même, au lieu d'absorber les vibrations, amplifier leur amplitude.

L'objet de la présente invention est donc de proposer une alternative aux nervures de renforcement afin d'accroître localement la tenue mécanique de la face avant technique, tout en améliorant son comportement vibratoire.

La présente invention a pour objet une face avant technique en matière plastique de véhicule automobile, pourvue de renforts locaux en matière plastique, caractérisée en ce que l'un au moins desdits renforts locaux est constitué par une enveloppe fermée délimitant une cavité intérieure creuse.

Conformément à l'invention, une partie au moins des nervures de renforcement de la face avant technique est remplacée par des renforts locaux creux dépourvus de nervures.

Les inventeurs à la base de l'invention ont en effet réalisé que dans les cas où les nervures d'une face avant technique traditionnelle se montrent inaptes à demeurer inerte face à des vibrations, des renforts locaux creux constituent d'excellents substituts aux zones nervurées, en conférant à la face avant technique non seulement de bonnes propriétés de résistance mécanique, mais encore en améliorant sa stabilité aux vibrations.

Dans un mode de réalisation préféré de l'invention, les renforts creux sont obtenus par injection dans un moule d'une matière thermoplastique et par injection complémentaire d'un fluide au coeur de la matière thermoplastique, de manière à former un canal de fluide qui repousse la matière thermoplastique contre les parois du moule.

Comme cela est bien connu pour les procédés traditionnels d'injection complémentaire de fluide dans des matières thermoplastiques, de telles parties creuses présentent l'avantage supplémentaire, par rapport à des nervures, d'éviter l'apparition de retassures.

Dans une variante préférée, le fluide utilisé pour l'injection complémentaire est un liquide, lequel présente l'avantage, par rapport à un gaz, d'éviter le foisonnement à l'intérieur du canal d'injection complémentaire des fibres éventuellement présentes dans la matière thermoplastique préalablement injectée.

Un autre avantage connu lié à l'injection complémentaire d'un fluide est la possibilité de réduire considérablement le temps de refroidissement de la pièce injectée, et ce d'autant plus que le fluide utilisé présente une grande capacité calorifique. C'est notamment le cas si le fluide utilisé est un liquide.

Dans une variante particulière de l'invention, le fluide utilisé est de l'eau.

Grâce au procédé d'injection complémentaire de fluide, on peut en outre mieux maîtriser l'épaisseur des parois des renforts locaux et ainsi alléger la face avant technique tout en lui conservant de bonnes propriétés mécaniques.

Ainsi, grâce à l'invention, on peut s'affranchir totalement ou partiellement du recours à des inserts métalliques rapportés ou à des parties nervurées.

Un autre avantage du procédé selon l'invention est que les renforts locaux peuvent présenter différentes formes ne pouvant pas être obtenues facilement par apport d'inserts métalliques ou par réalisation de nervures, et cependant compatibles avec une injection complémentaire de fluide.

En effet, les inserts métalliques que l'on utilise traditionnellement pour renforcer une face avant technique doivent présenter une forme simple sous peine d'être trop coûteux à fabriquer. Quant aux nervures, elles sont connues pour engendrer des problèmes de démoulage, problèmes qui ne se posent pas si on met en oeuvre le procédé d'injection complémentaire de gaz, la pièce obtenue ayant une forme particulièrement simple bien qu'étant creuse.

Dans sa réalisation pratique, la face avant technique selon l'invention comporte avantageusement des renforts locaux aux endroits suivants :

- pourtour du logement d'optique,
- support sous le logement d'optique,
- une portion au moins des jambages,
- contour du radiateur,
- fixations du module de refroidissement,
- support de tout composant massique, comme par exemple un réservoir,
- fixations supérieures de la face avant technique à ses extrémités,
- serrure de capot, notamment lorsque celle-ci est située sur la traverse supérieure de la face avant technique.

Ces exemples permettent de bien comprendre l'avantage précédemment mentionné du procédé d'injection complémentaire de fluide, selon lequel les renforts locaux de la face avant technique peuvent présenter toute forme géométrique.

Dans un mode de réalisation particulier de l'invention, la face avant technique comporte un ou des renforts locaux creux ainsi qu'au moins une partie moulée constituée par une quantité de matière plastique correspondant exactement à la quantité de matière plastique chassée par le fluide lors de l'injection complémentaire de celui-ci.

La présente invention a également pour objet un procédé de réalisation d'une face avant technique comportant des renforts locaux, caractérisé en ce qu'il comprend une étape d'injection principale au cours de laquelle une matière thermoplastique est introduite dans un moule et une étape d'injection complémentaire de fluide au cours de laquelle un fluide est introduit dans le moule, au coeur de la matière thermoplastique, ce fluide provoquant le déplacement de la matière thermoplastique au voisinage des parois du moule et la formation d'une cavité intérieure creuse au coeur de la matière plastique.

Dans un mode de réalisation particulier, le procédé consiste à injecter la matière thermoplastique et le fluide dans une première empreinte du moule et à expulser, vers une seconde empreinte du moule communiquant avec la première empreinte, une quantité de matière thermoplastique chassée de la première empreinte par le fluide injecté lors de l'injection complémentaire.

La présente invention vise également à proposer un procédé pour conférer une faible inertance à une face avant technique, qui se caractérise par le fait que l'on intègre à ladite face avant technique au moins un renfort local constitué par une enveloppe fermée délimitant une cavité intérieur creuse.

Afin de faciliter la compréhension de l'invention, des modes de réalisation vont maintenant en être décrits, à l'aide des figures annexées dans lesquelles :

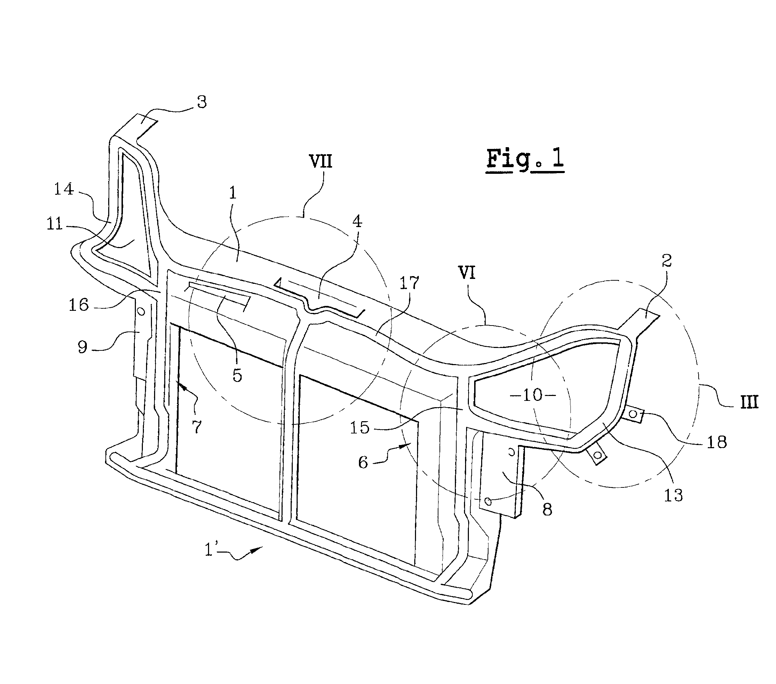

- la figure 1 est une vue en perspective de trois quart avant d'une face avant technique selon l'invention,
- la figure 2 est une vue en perspective arrière de la face avant technique de la figure 1,
- la figure 3 est une vue à plus grande échelle du détail III de la figure 1,
- la figure 4 est une vue arrière de la figure 3,

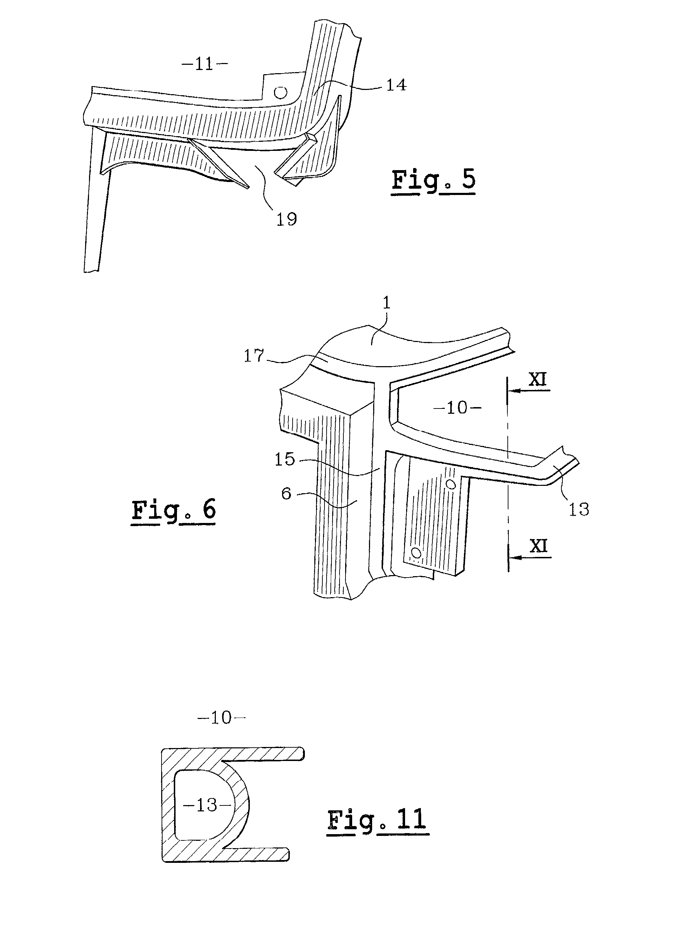

- la figure 5 est une vue du détail V de la figure 2,
- la figure 6 est une vue du détail VI de la figure 1,
- la figure 7 est une vue du détail VII de la figure 1,
- la figure 8 est une vue de dessous correspondant à la figure 7,
- la figure 9 représente la même face avant technique sur laquelle on a reporté ses points de fixation sur les ailes et sur les logerons du véhicule, ainsi qu'un point de mesure critique,
- la figure 10 est un graphe représentant l'inertance mesurée au point de fixation du bloc optique en fonction de la fréquence des vibrations longitudinales imprimées à la face avant technique
- la figure 11 est une section selon XI-XI de la figure 6.

La face avant technique représentée sur les figures comprend une traverse supérieure 1 qui s'étend d'un point de fixation d'aile 2 à un autre 3 en comportant une partie centrale sensiblement rectiligne et des parties d'extrémités segmentées et globalement courbes.

La traverse supérieure 1 comporte un logement de serrure 4 au milieu de sa face horizontale et une prise d'air 5 excentrée sur sa face verticale.

La partie centrale de la traverse supérieure est bordée par des jambages verticaux 6 et 7 dirigés vers le bas et portant chacun une plaque 8, 9 de fixation à un longeron du véhicule (non représenté).

Une traverse inférieure 1' relie les deux jambages 6, 7.

Au-delà de chaque jambage 6, 7 et en dessous de chaque partie d'extrémité de la traverse supérieure 1, la face avant technique définit un logement de bloc optique 10, 11.

Différentes parties de la face avant technique comportent des renforts locaux dont certains, selon l'état de la technique, sont réalisés par nervurage et dont d'autres, selon l'invention, sont réalisés par des corps creux.

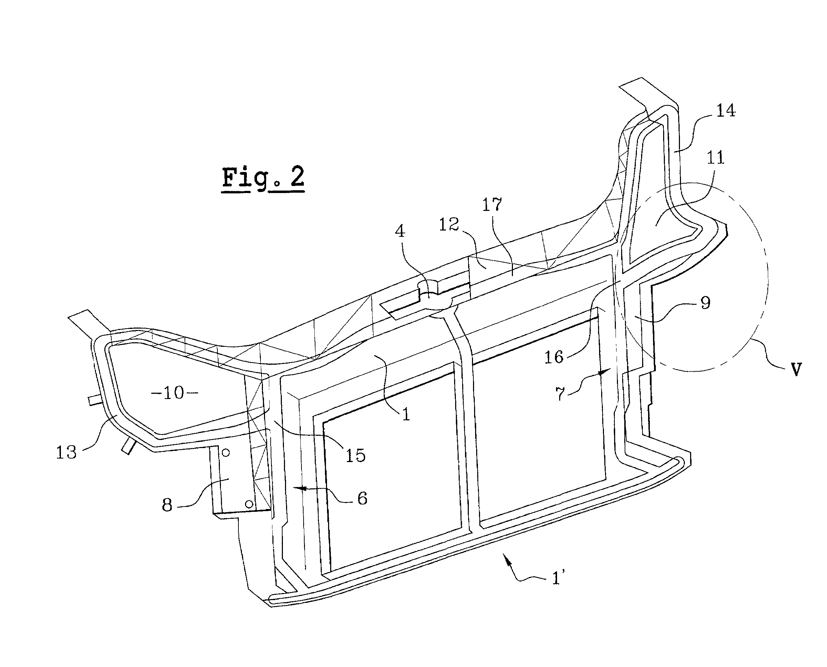

C'est ainsi que la traverse supérieure 1 comporte, sur sa face arrière comme on le voit à la figure 2, un réseau de nervures 12 s'étendant sur la totalité de sa surface et se prolongeant sur la face arrière des jambages 6 et 7.

En complément de ces nervurages, la face avant technique comporte un certain nombre de renforts locaux creux aux emplacements suivants :

- renforts 13, 14 aux pourtours des logements d'optiques 10 et 11,
- renforts 15, 16 à la naissance des jambages 6 et 7,
- renfort 17 dans la face horizontale de la traverse supérieure 1.

Pour bien clarifier la notion de corps ou renfort creux, on a représenté à la figure 11 une section du renfort creux 13 du pourtour d'optique 10.

On voit, sur cette figure 11, que le renfort creux 13 est constitué par une enveloppe fermée délimitant une cavité intérieure creuse.

Cette enveloppe fermée a été obtenue par injection de matière thermoplastique dans un moule puis injection complémentaire d'eau au coeur de cette matière plastique.

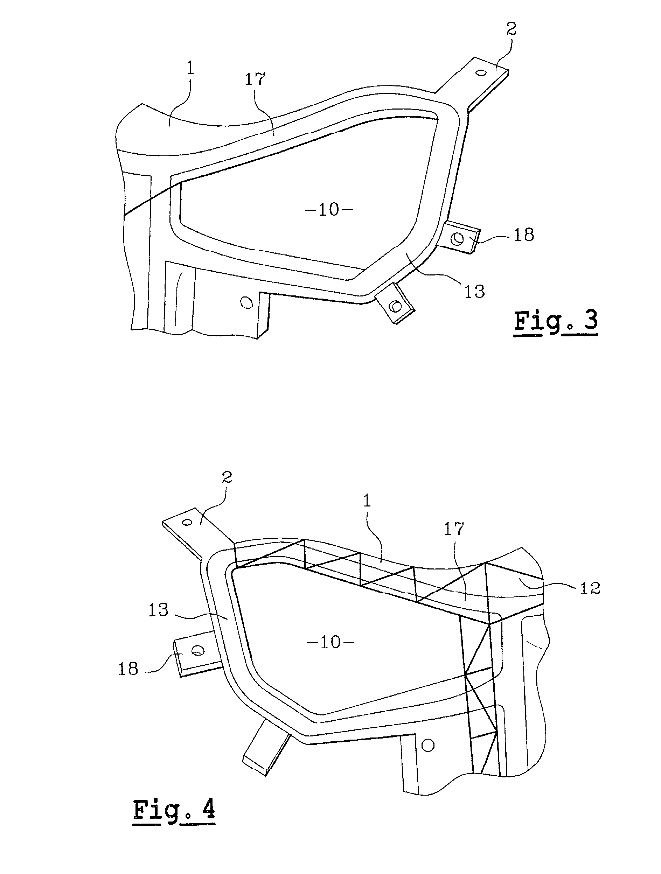

Revenant à la figure 3, on constate que la partie latérale externe du pourtour d'optique supporte une patte 18 de fixation de blocs optiques.

En dessous de chaque logement d'optique 10, 11, la face avant technique comporte une forme en queue d'aronde 19 servant la fixation d'un réservoir de lave-glaces (non représenté) ou de tout autre organe pouvant être supporté par la face avant technique.

Globalement, la patte de fixation 18, la queue d'aronde 19 et le bloc optique rapporté dans le logement 10 justifient la nécessité d'un renfort creux 13 au pourtour dudit logement.

On peut noter que, selon l'invention, le fait de réaliser un renfort creux d'une seule pièce à la périphérie d'un logement ne pose aucune difficulté du fait que la technique d'injection complémentaire de fluide autorise des configurations de pièces complexes, le canal intérieur du corps creux pouvant aisément se former même lorsque ladite pièce n'est pas rectiligne.

Ainsi, le renfort creux forme un cadre entourant complètement le logement d'optique et assurant ainsi la rigidité de ce dernier.

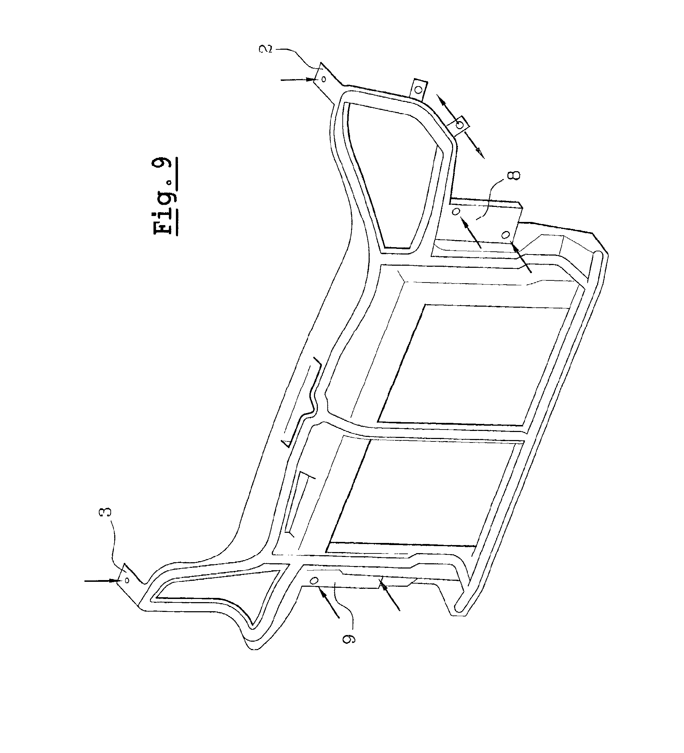

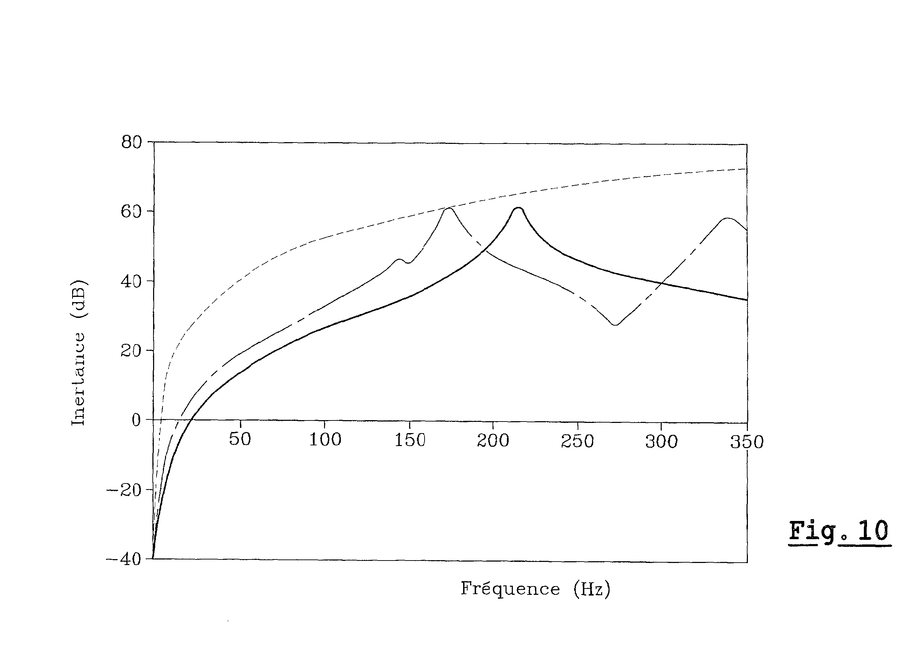

Comme on le verra lors de la description des figures 9 et 10, ce renfort creux améliore non seulement la rigidité du pourtour d'optique mais également son inertance, c'est-à-dire son comportement en cas de sollicitation vibratoire dynamique.

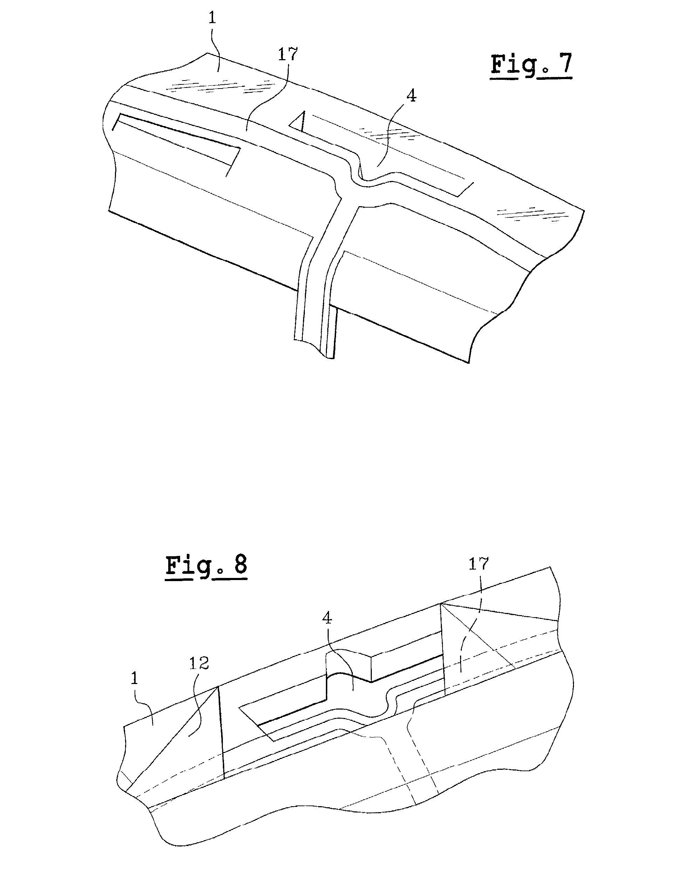

Comme on le voit à la figure 6, chaque naissance de jambages 6, 7 est également renforcée par un corps ou renfort creux 15, 16 qui s'étend depuis la traverse supérieure jusqu'en dessous des logements d'optiques.

Enfin, comme le représente la figure 7, la traverse supérieure 1 de la face avant technique comporte également un renfort creux qui traverse le logement de serrure 4 et en délimite le pourtour afin de renforcer la fixation de la serrure.

Le renfort creux 17 de la traverse supérieure 1 est réalisé d'un seul tenant avec les renforts creux des jambages.

Par conséquent, dans le mode de réalisation décrit, tous les renforts de la face avant technique sont constitués par un seul corps creux global qui passe par les jambages et la traverse supérieure, entoure chaque pourtour de logement d'optique, et parcourt toute la traverse inférieure. Les jambages 6, 7 relient mécaniquement les traverses supérieure et inférieure ainsi que les pourtours d'optiques, d'où la nécessité de renforcer lesdits jambages par des nervures, comme précédemment décrit.

A l'aide des figures 9 et 10, on va maintenant examiner le comportement vibratoire de la face avant technique précédemment décrite.

La face avant technique étant assujettie par ses points 2, 3, et plaques 8 et 9 à un gabarit (non représenté) reproduisant les fixations d'ailes et de longerons du véhicule, ce gabarit est soumis à des vibrations axiales selon la direction longitudinale du véhicule (direction X).

La fréquence des vibrations varie de 0 à 400 Hz.

On mesure l'accélération $\gamma$ au point P de fixation de l'optique et on calcule l'inertance I à l'aide de la formule suivante :

$$I = 20 \text{ x Log } (\gamma / F)$$

où F est l'intensité de la force appliquée par le gabarit à la face avant technique.

La mesure obtenue en fonction des fréquences de 0 à 400 Hz fournit le graphe de la figure 10, sur lequel on a reporté en trait fort la mesure pour la face avant technique précédemment décrite et, à titre de comparaison, en trait mixte la mesure pour une face avant technique comportant des nervures à la place des renforts creux.

En observant ce graphe, on constate tout d'abord que la face avant nervurée possède, pour toute fréquence inférieure à 200 Hz, une inertance toujours plus grande que la face avant renforcée par des corps creux.

Cette différence d'inertance justifie le meilleur comportement vibratoire de la face avant technique selon l'invention.

En outre, on remarque que chacune des deux faces avant technique présente un pic d'inertance pour une fréquence donnée. Ce pic se situe à environ 175 Hz pour la face avant technique nervurée et à environ 210 Hz pour la face avant technique à corps creux.

Il existe donc un décalage d'environ 35 Hz entre les deux fréquences de pic, ce qui signifie que la face avant technique nervurée a tendance à entrer en résonance avec la source de vibration dans une gamme de fréquences plus basse que la face avant technique à corps creux.

A titre de comparaison, on a également représenté sur le graphe une courbe d'iso-raideur à 800 N/m, passant par le pic d'inertance à 175 Hz de la face avant technique nervurée. Cette courbe d'iso-raideur est représentative de l'inertance d'une face avant technique hypothétique qui, quelque soit la fréquence étudiée, aurait le comportement vibratoire de la face avant technique nervurée à 175 kHz.

En d'autres termes, la face avant technique nervurée à 175 Hz se comporte comme cette face avant technique hypothétique à inertance élevée, dont on voit qu'à 210 Hz, fréquence à laquelle elle présente le pire comportement vibratoire, la face avant technique à corps creux selon l'invention a une inertance quand même inférieure à celle de la face avant technique hypothétique.

En d'autres termes, le pic d'inertance de la face avant technique à corps creux est relativement moins élevé que celui de la face technique nervurée.

Enfin, il est également intéressant de noter que pour les fréquences critiques comprises essentiellement entre 0 et 100 Hertz, il existe un net écart de valeur d'inertance entre la face avant technique selon l'invention et la face avant technique nervurée, à l'avantage de la face avant technique selon l'invention.

Le recours, selon l'invention, a des renforts locaux constitués par une enveloppe fermée délimitant une cavité intérieure creuse, obtenue notamment par injection complémentaire de fluide, s'avère également intéressant en d'autres endroits de la face avant technique et notamment au centre de sa traverse supérieure.

En effet, à cet endroit, les sollicitations longitudinales de la face avant technique sont généralement compensées par un réseau de nervures prévu pour résister à des forces verticales correspondant aux sollicitations d'arrachage du capot.

De ce fait, ces nervures sont inappropriées pour résister à un écrasement longitudinal de la face avant.

La structure de renfort selon l'invention procure une meilleure inertance, plus faible, de sorte qu'à quantité de matière égale, les mesures présentées sur le graphe de la figure 10 montreraient un avantage encore plus flagrant pour la face avant technique à renfort creux au centre de la traverse supérieure de cette dernière.

Bien entendu, les modes de réalisation décrits ci-dessus ne présentent aucun caractère limitatif et pourront subir toute modification sans sortir du cadre de la présente invention.

## Revendications

1. Face avant technique en matière plastique de véhicule automobile, pourvue de renforts locaux en matière plastique, **caractérisée en ce que** l'un au moins desdits renforts locaux (13, 14, 15, 16, 17) est constitué par une enveloppe fermée délimitant une cavité intérieure creuse.

2. Face avant technique selon la revendication 1, **caractérisée en ce que** les renforts creux (13, 14, 15, 16, 17) sont obtenus par injection d'une matière thermoplastique et par injection complémentaire d'un fluide au coeur de la matière thermoplastique, de manière à former un canal de fluide qui repousse la matière thermoplastique contre les parois du moule.

3. Face avant technique selon la revendication 2, **caractérisée en ce que** le fluide utilisé pour l'injection complémentaire est un liquide, par exemple de l'eau.

4. Face avant technique selon l'une quelconque des revendications 1 à 3, **caractérisée en ce qu'**elle comporte des renforts locaux dans au moins un des endroits suivants :

   - pourtour du logement d'optique (10, 11),
   - support (19) sous le logement d'optique,
   - une portion au moins des jambages (6, 7),
   - contour du radiateur,
   - fixations du module de refroidissement,
   - support (19) de tout composant massique, comme par exemple un réservoir,
   - fixations supérieures de la face avant technique à ses extrémités (2),
   - serrure de capot (4), notamment lorsque celle-ci est située sur la traverse supérieure (1) de la face avant technique.

5. Face avant technique selon l'une quelconque des revendications 1 à 4, **caractérisée en ce qu'**elle comporte un ou des renforts locaux creux ainsi qu'au moins une partie moulée constituée par une quantité de matière plastique correspondant exactement à la quantité de matière plastique chassée par le fluide lors de l'injection complémentaire de celui-ci.

6. Procédé de réalisation d'une face avant technique comportant des renforts locaux, **caractérisé en ce qu'**il comprend une étape d'injection principale au cours de laquelle une matière thermoplastique est introduite dans un moule et une étape d'injection complémentaire de fluide au cours de laquelle un fluide est introduit dans le moule, au coeur de la matière thermoplastique, ce fluide provoquant le déplacement de la matière thermoplastique au voisinage des parois du moule et la formation d'une cavité intérieure.

7. Procédé selon la revendication 6, **caractérisé en ce qu'**il consiste à injecter la matière thermoplastique et le fluide dans une première empreinte et à expulser, vers une seconde empreinte du moule communiquant avec la première empreinte, une quantité de matière thermoplastique chassée de la première cavité par le fluide injecté lors de l'injection complémentaire.

8. Procédé pour conférer une faible inertance à une face avant technique, **caractérisé par le fait que** l'on intègre à ladite face avant technique au moins un renfort local constitué par une enveloppe fermée délimitant une cavité intérieure creuse.

Fig. 1

Fig. 2

EP 1 300 322 A1

Fig. 3

Fig. 4

−11−

14

Fig. 5

19

1

17

−10−

XI

15

6

Fig. 6

13

XI

−10−

−13−

Fig. 11

Fig. 7

Fig. 8

Fig. 9

Inertance (dB)

80

60

40

20

0

−20

−40

50  100  150  200  250  300  350

Fréquence (Hz)

Fig. 10

Office européen
des brevets

**RAPPORT DE RECHERCHE EUROPEENNE**

Numéro de la demande

EP 02 29 2442

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | WO 01 39949 A (MCCORD WINN TEXTRON ;AMELIAL KARIM (US); BURNHAM BOB (US); DUCO MI) 7 juin 2001 (2001-06-07) * figure 31 * * page 15, ligne 23 - page 15, ligne 26 * | 1-3,6-8 | B62D25/08 B62D29/04 B29C45/17 |
| Y | DE 43 13 979 A (TOYODA GOSEI KK) 4 novembre 1993 (1993-11-04) * figures 9-12,17,18 * * colonne 3, ligne 58 - colonne 7, ligne 20 * | 1-3,6-8 | |

| | | | DOMAINES TECHNIQUES RECHERCHES (Int.Cl.7) |
|---|---|---|---|
| | | | B62D B29C |

Le présent rapport a été établi pour toutes les revendications

| Lieu de la recherche | Date d'achèvement de la recherche | Examinateur |
|---|---|---|
| LA HAYE | 9 janvier 2003 | Deraymaeker, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 02 29 2442

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2003

| Document brevet cité au rapport de recherche | | Date de publication | Membre(s) de la famille de brevet(s) | | Date de publication |
|---|---|---|---|---|---|
| WO 0139949 | A | 07-06-2001 | AU<br>WO | 2055701 A<br>0139949 A2 | 12-06-2001<br>07-06-2001 |
| DE 4313979 | A | 04-11-1993 | JP<br>JP<br>JP<br>JP<br>DE | 3203761 B2<br>5305627 A<br>2773544 B2<br>5305849 A<br>4313979 A1 | 27-08-2001<br>19-11-1993<br>09-07-1998<br>19-11-1993<br>04-11-1993 |